# EUROPÄISCHE PATENTSCHRIFT

(11) **EP 1 221 432 B1**
(45) Veröffentlichungstag und Bekanntmachung des Hinweises auf die Patenterteilung: **20.02.2008**
(21) Anmeldenummer: 01128296.9
(22) Anmeldetag: 29.11.2001
(51) Int. Cl.: C04B 35/536, C04B 41/83, H01M 8/02, F16J 15/10

(54) **Mit Acrylharzen imprägnierter Körper aus expandiertem Graphit**
Expanded graphite body impregnated with acrylic resins
Corps de graphite expanse imprégné par résines acryliques

(30) Priorität: 07.12.2000 DE 10060838
(43) Veröffentlichungstag der Anmeldung: 10.07.2002
(73) Patentinhaber: SGL Carbon AG, 65203 Wiesbaden (DE)
(72) Erfinder: Bacher, Jürgen, 86637 Wertingen (DE); Öttinger, Oswin, Dr.-Ing., 86405 Meitingen (DE)

(56) Entgegenhaltungen:
- US-A1- 2001 046 560
- ANONYMOUS: "HERNON POROSITY SEALANT (HPS) 991, TECHNICAL DATA SHEET" INTERNETPUBLIKATION, [Online] XP002231628 Gefunden im Internet: <URL:http://www.adhesive-sealant.com/cgi-b in/searchcsv.pl?method=exact&header=grade& search=991> [gefunden am 2003-02-18]
- ANONYMOUS: "GRAFOIL MATERIAL SAFETY DATA SHEET" INTERNETPUBLIKATION, [Online] XP002231629 Gefunden im Internet: <URL:http://www.graftech.com/products/graf oil/index.html> [gefunden am 2003-02-18]

## Beschreibung

Gegenstand der Erfindung ist ein mit Kunstharzen imprägnierter Körper aus expandiertem oder aus mindestens teilweise wieder verdichtetem expandiertem Graphit
und ein Verfahren zum Herstellen eines solchen Körpers.

Werkstoffverbunde aus Graphit und Kunststoffen sind in vielen technischen Anwendungen weit verbreitet. Beispielsweise werden Körnungen aus Elektrographit mit Fluorkunststoffen zu hoch korrosionsbeständigen Bauteilen für den Chemieapparatebau verarbeitet, die allerdings wegen der Kosten der Fluorkunststoffe und der notwendigen Verarbeitungstechnik vergleichsweise teuer sind. Ein inhaltlich noch näher an der hier behandelten Anmeldung liegendes Thema ist in der Schrift US 4,265,952 dargestellt: Expandierter Graphit wird mit z.B. feinem PTFE-Pulver gemischt und anschließend verpreßt. Insofern unterscheidet sich diese Herstellungstechnik von der in der hier vorliegenden Anmeldung beschriebenen Imprägniertechnik.

Ein anderes Beispiel für einen Werkstoffverbund aus Graphit und Kunststoff sind oberflächlich mit Harzen imprägnierte Folien aus Naturgraphit, die überwiegend in Form von Flachdichtungen gegen besonders aggressive Medien eingesetzt werden. Zu diesem zweiten Beispiel finden sich viele Belege in der technischen Literatur.
Folien aus Naturgraphit werden heute weltweit jährlich zu Tausenden von Tonnen hergestellt. Das dazu verwendete Verfahren ist in den Patentschriften EP 0 087 489, US 3,404,061 und US 3,494,382 beschrieben. Kurz gefaßt geschieht folgendes:
Ein Einlagerungsagens wie beispielsweise konzentrierte Schwefelsäure wirkt in Gegenwart eines Oxidationsmittels wie z.B. konzentrierte Salpetersäure oder Wasserstoffperoxid auf Naturgraphit, vorzugsweise plättchen- oder flockenförmigen Naturgraphit, ein. Dabei entstehen Graphiteinlagerungsverbindungen in den Graphitflocken oder Graphitplättchen. Durch kurzzeitiges Erhitzen, z.B. beim Einführen in die Flamme eines Gasbrenners, werden die Flocken thermisch zersetzt und durch den bei diesem Zersetzungsvorgang in ihrem Inneren entstehenden Gasdruck zu lockeren Graphitpartikeln von wurmartiger Gestalt aufgebläht. Dieses Produkt wird auch als "expandierter" Graphit oder als Graphitexpandat bezeichnet.

Expandierter Graphit ist außerordentlich bildsam und läßt sich leicht ohne Zuhilfenahme eines besonderen Binders unter mehr oder weniger starkem Verdichten formen. Das wirtschaftlich bedeutendste so hergestellte Produkt ist eine flexible Graphitfolie, die rationell auf Kalanderstraßen hergestellt werden kann. Solche Produkte haben Rohdichten zwischen 0,7 und 1,3 g/cm³. Es sind aber auch andere Teile verschiedener Geometrie, etwa einzelne Dichtungskörper möglich, die durchschnittlich stärker verdichtet sind und Rohdichten von 1,0 bis 1,8 g/cm³ aufweisen. Oder es gibt schwammartige Teile von durchschnittlich geringer Rohdichte, die Werte von 0,1 bis 1,0 g/cm³ haben. Alle diese Körper von unterschiedlicher Gestalt und unterschiedlicher Rohdichte haben ein offenes Porensystem. Sie werden im Folgenden als "Vorprodukt" bezeichnet.

Werkstoffverbunde aus einem solchen Vorprodukt und Kunstharzen oder Kunststoffen erfüllen vielfältige Aufgaben. Kunstharze oder Kunststoffe senken die Permeabilität, verbessern die Oberflächeneigenschaften, z.B. die Kratzfestigkeit, erhöhen die Festigkeit in geringem Umfang, senken die thermische Beständigkeit eines Werkstoffverbundes mit expandiertem Graphit, können die elektrische Leitfähigkeit vermindern oder schränken die Medienbeständigkeit ein. Eine zweckmäßige Technik zur Herstellung der Werkstoffverbunde ist das Imprägnieren.

Gemäß DE 32 44 595 kann die Haftwirkung von Graphitfolien an Metallflächen dadurch vermindert werden, daß das Vorprodukt in oberflächennahen Zonen mit Furanharz imprägniert wird.

Nach dem bisherigen Stand der Technik ist das weitgehende Durchtränken von Formkörpern aus expandiertem und teilweise wieder verdichtetem Graphit schwierig. Zum Überwinden der Schwierigkeiten lehrt die WO 99/16141 (US 6,037, 074), daß ein solcher Körper dann in befriedigender Weise imprägnierbar ist, wenn er mit mineralischen Fasern durchsetzt ist, die auch durch die Oberfläche der jeweiligen Körper treten. Auf diese Weise werden kleine Kanäle entlang dieser mineralischen Fasern gebildet, in denen das Harz beim Imprägnieren in das Innere der Körper strömen kann. In dieser Schrift wird als Imprägniermittel ein in Aceton gelöstes Phenolharz - also ein lösungsmittelhaltiges Duromerharz mit Kondensationsreaktionen beim Härten - genannt.

Eine andere Methode zur Erzielung einer guten Durchtränkung von Körpern aus expandiertem Graphit besteht darin, die gewünschten Harze durch Lösungsmittel in niedrigviskose Flüssigkeiten zu überführen, mit denen die Imprägnierung vollständiger wird. In der japanischen Schrift JP 1 100 040 A werden die Duromerharze auf der Basis von Phenolen, Epoxiden, Polyimiden, Melaminen, Polyestern und Furanen genannt, die in einer Mischungslösung mit Polyvinylbutyral verwendet werden.

In der japanischen Patentschrift JP 1 308 872 A2 wird die Lösung anderer Aufgaben beschrieben. Es wird ein Werkstoffverbund aus einem Glasfaservlies und einer Folie aus expandiertem Graphit hergestellt, um auf diese Weise letztere zu verstärken und insgesamt einen flüssigkeitsdichten Werkstoff zu erhalten. Dies wird durch eine Imprägnierung mit Epoxidharz erreicht, wobei das Harz das Vlies durchdringt und gleichzeitig auch oberflächlich, d.h. partiell in die Folie eindringt. Bei der anschließenden Härtung entsteht aus dem imprägnierten Vlies der tragende Teil des Verbundwerkstoffes, der dann auch oberflächlich dicht ist.

Ähnlichen Aufgaben, nämlich der Verbesserung der Festigkeit und der Gasdichtigkeit, dient das Imprägnieren von Folie aus expandiertem Graphit mit Phenolharz oder Epoxidharz, dargestellt in der japanischen Patentschrift JP 60242041A2 (DE 35 12 867 C2). Die Besonderheit liegt hier in einem mehrfach wiederholten Entgasungsprozeß der flüssigen Harze und der darin befindlichen Folie, sicherlich mit dem Ziel, die Qualität der Imprägnierung zu verbessern.

In der Schrift DE 43 32 346 A1 wird das Imprägnieren der Folien aus expandiertem Graphit zum Zwecke der Haftverbesserung zu aufliegenden Elastomerschichten beschrieben. Die Viskosität der verwendeten Epoxidharze beträgt dort 2100 bis 2400 mPa·s.

In der japanischen Schrift JP 11354136 A2 mit dem Titel "Fuel Cell, Separator for Fuel Cell, and Manufacture Therefor" wird die Herstellung von expandiertem Graphit in Blattform (sheet-like shape) beschrieben. Dieser teilweise wieder verdichtete expandierte Graphit wird anschließend zerkleinert (pulverized) und dann alternativ mit Harzen, lösungsmittelfreiem Epoxidharz, festem Epoxidharz, Melaminharz, Acrylharz, Phenolharz, Polyamidharz usw. gemischt. Dieses Gemisch wird nachfolgend verformt. Diese Technik unterscheidet sich durch das Einmischen der Harze in eine Körnung aus expandiertem Graphit von den erfindungsgemäßen Körpern mit ganz anderer Struktur, wie später gezeigt werden wird.

In WO 98/09926 wird eine Graphitfolie beschrieben, die zumindest einseitig mit einem Kunststoff beschichtet wird. Dies geschieht zunächst mit einer wässrigen Lösung eines Acrylharzes, die auf die Oberfläche aufgetragen wird, dort verbleibt, aber auch in oberflächennahe Zonen der Folie eindringt und dann eingetrocknet wird.

In US 2001/0046560 wird Graphitfolie mit einem Methacrylat imprägniert, wobei die Aushärtung unter Druck erfolgt.

Der vorstehend dargelegte Stand der Technik offenbart verschiedene unter Verwendung von expandiertem Graphit hergestellte Körper, die Kunstharze enthalten und Verfahren zu ihrer Herstellung. Man erkennt unschwer, daß es schwierig ist, hochwertige, kunstharzhaltige Graphitkörper aus wiederverdichtetem, expandiertem Graphit herzustellen. Alle beschriebenen Verfahren haben teils schwerwiegende Nachteile: Wenn mit Lösungsmitteln verdünnte und damit dünnflüssigere Harze beim Imprägnieren verwendet werden, geht das Imprägnieren zwar leichter, doch verursachen die Dämpfe der in aller Regel leicht flüchtigen Lösungsmittel beim Imprägnieren selbst, besonders aber bei späteren Verfahrensschritten gravierende Probleme. Insbesondere hinterlassen sie durch ihr Entweichen beim Aushärten der Harze feine Kanäle, die die Permeabilität der hergestellten Körper heraufsetzen. Wenn eine erhöhte Permeabilität weder toleriert werden kann noch gewünscht ist, besteht weiterhin ein generelles Problem: Wenn das Aushärten nicht sehr langsam, d.h. zeitaufwändig vorgenommen wird, entstehen in den Körpern Blasen und Risse, die ihre Qualität erheblich herabsetzen. Entsprechendes gilt für Harzsysteme, die beim Aushärten Gase aus Kondensationsreaktionen freisetzen.

Durch das Entweichen von Lösungsmitteln oder anderen Gasen und Dämpfen entsteht in den Körpern eine Restporosität. Es wird nun häufig versucht, die Restporosität durch einen oder mehrere zusätzliche Imprägniergänge zu beseitigen.
Die damit verbundene Vergrößerung des Aufwandes liegt auf der Hand und der Erfolg ist durchaus begrenzt. Lösungsmittelhaltige Harze erfordern vor allem stets auch Maßnahmen zu deren sicherer Handhabung und zum schadlosen Entfernen oder zum Rückgewinnen der Lösungsmittel, was den Aufwand noch weiter erhöht. Der Ausweg über den Zusatz von die Körperoberflächen durchsetzenden Fasern verbessert vielleicht die Imprägniereigenschaften des Körpers, beseitigt aber nicht die für das Verwenden lösungsmittelhaltiger Dämpfe oder Gase abspaltender Harze geschilderten Probleme. Zudem hat man stets ein bestimmte Fasern enthaltendes Produkt, das aufwändiger herstellbar ist.

Die besprochenen Probleme mit in den Harzsystemen enthaltenen Lösungsmitteln gelten auch für wasserhaltige Harze, z.B. nach WO 98/09926. Darüber hinaus wird nach dieser Schrift eine Graphitfolie mit einem Harzsystem versehen, welches die Ausbildung einer oberflächlichen Kunststoffschicht zum Zwecke der Verstärkung zur Folge hat. Beim Aufbringen des Harzes dringt dieses auch in die Oberfläche der Folie ein. Die Kunststoffschicht hat zum einen die Wirkung, daß ein zweites Coating mit besserer Haftung aufgebracht werden kann, und zum anderen die Wirkung einer elektrischen Isolation.
Beide Aspekte, das in Wasser gelöste Harzsystem und die elektrische Isolation an der Körperoberfläche, werden für die Verwendung der Körper gemäß der vorliegenden Anmeldung als nachteilig angesehen.

Die Aufgabe der dieser Patentanmeldung zugrundeliegenden Erfindung war es deshalb, einen Körper aus expandiertem oder aus mindestens teilweise wieder verdichtetem expandiertem Graphit zu schaffen, dessen flüssigkeitszugängliches Porensystem vollständig oder teilweise mit einem nicht, teilweise oder vollständig ausgehärteten Kunstharz gefüllt ist. Dieser Körper sollte keine Fehlstellen wie Blasen oder Risse enthalten, die durch Reaktionen des Kunstharzes beim Aushärten verursacht werden können. Der Körper sollte mit vergleichsweise geringem Aufwand herstellbar sein. Er sollte korrosionsbeständig, elektrisch und thermisch leitfähig und in Abhängigkeit vom Verdichtungsgrad von flüssigkeitsdurchlässig bis hin zu gasdicht sein.

Die Aufgabe wird mit einem Körper nach Anspruch 1 und einem Verfahren nach Anspruch 9 dadurch gelöst, daß das Vorprodukt oder der aus dem imprägnierten Vorprodukt durch mindestens teilweises Verdichten erhaltene Körper entweder lösungsmittelfreie, niedrigviskose, lagerstabile Acrylharzsysteme oder gehärtete Acrylharzsysteme enthält. Die Harzsysteme gelangen durch Imprägnieren des Vorproduktes mit lösungsmittelfreien, niedrigviskosen, lagerstabilen und polymerisierbaren Acrylharzsystemen in den Körper.

Um die vorgenannten Nachteile lösungsmittelhaltiger Harzsysteme auszuschließen und um die Vorteile von Harzsystemen niedriger Viskosität zu erreichen, wurden die folgenden speziellen lösungsmittelfreien Harzsysteme gemäß der hiermit vorgelegten Erfindung eingesetzt:

Die Hauptkomponente ist bevorzugt Triethylenglycoldimethacrylat. Das Startersystem kommt aus der Gruppe der Azoinitiatoren und umfasst 2,2'-Dimethyl-2,2'-azodipropiononitril und 1,1'-Azobis-(1-cyclohexancarbonitril). Eine mögliche Auswahl der prozentualen Anteile der einzelnen Komponenten an der Gesamtmischung wird in den Beispielen genannt.

Die bei Verarbeitungstemperatur niedrigen Viskositäten der Harzsysteme sichern eine gute und rationelle Imprägnierung des Vorproduktes und die bei der Härtung ablaufenden Polymerisationen lassen keine niedermolekularen Spaltprodukte entstehen, die eine Blasenbildung oder gar Risse im Körper verursachen könnten. Die Erprobung der Harzsysteme wird in den Beispielen näher beschrieben.

Die angegebene Mischung hat bei Raumtemperatur eine Viskosität zwischen 10 und 20 mPa·s, die deutlich unter der von lösungsmittelfreien, niedrigviskosen, lagerstabilen und polymerisierbaren Harzsystemen aus der Gruppe der Isocyanate und deren Reaktionspartner und/oder Epoxide liegt. Die Hauptkomponente des Acrylharzsystems läßt sich an Hand der zeitlichen Entwicklung der Viskositäten in der Einheit [mPa·s] bei Raumtemperatur charakterisieren:
Frische Mischung 13, nach acht Tagen 13 und nach 48 Tagen 14.
Die anhand dieser Viskositätsmessungen nachgewiesene, geringe Rate der Veränderungen des Harzes bei Raumtemperatur und über einen Zeitraum von mehreren Wochen wird mit dem Begriff hohe "Lagerstabilität" bezeichnet.

Der für das Herstellen des Vorprodukts verwendete expandierte Graphit besteht aus aufgefächerten, wurmartigen Gebilden, in denen feinste Graphitplättchen in der Form eines defekten Ziehharmonikabalges zusammenhängen. Beim Zusammenpressen zum Vorprodukt schieben sich diese Plättchen in- und übereinander. Sie verzahnen sich untereinander und kommen so wieder in einen ohne Zerstörung nicht mehr lösbaren Kontakt. Es entsteht auf diese Weise im Vorprodukt ein poröses Graphitgerüst oder -Netzwerk, das wegen der guten Kontakte der Graphitplättchen untereinander eine gute elektrische und auch eine gute thermische Leitfähigkeit hat. Da diese Eigenschaften ihren Grund in der Gerüstfunktion des Graphits im Vorprodukt haben, werden sie durch das Imprägnieren mit Kunstharz nicht negativ beeinflusst. Bei einem späteren Komprimieren des mit Harz imprägnierten Vorprodukts können sie sogar noch verbessert werden.

Das Vorprodukt ist überall von offenen Poren, die untereinander in vielfältiger Weise verbunden sind, durchzogen. Durch dieses Netzwerk von miteinander verbundenen Poren, dringt beim Imprägnieren das Kunstharz in den Vorproduktkörper ein und kann ihn unter geeigneten Bedingungen auch vollständig ausfüllen. Aus dem Netzwerk von Poren wird dann ein Netzwerk aus Kunstharz. Beide Netzwerke, das Graphitnetzwerk und das Poren- bzw. Kunstharznetzwerk, ergeben in Kombination die hervorragenden Eigenschaften der so hergestellten Endprodukte. Durch ihr gezieltes Einstellen wird es auch möglich, das Eigenschaftsniveau der Endprodukte zu steuern. Beispielsweise hat ein wenig vorverdichteter und damit hochporöser Vorproduktkörper eine geringere elektrische und thermische Leitfähigkeit und einen geringeren Anisotropiegrad als ein höher verdichteter Vorproduktkörper. Er kann dafür jedoch mehr Kunstharz aufnehmen und erhält ein modifiziertes Festigkeitsverhalten. Bei stark verdichteten Vorproduktkörpern sind diese Verhältnisse umgekehrt. Aus ihnen werden nach dem Imprägnieren und Aushärten des Kunstharzes Produkte mit verbesserter elektrischer und thermischer Leitfähigkeit sowie guten mechanischen Festigkeiten erhalten. Alle hier beschriebenen erfindungsgemäßen Körper sind gegen Flüssigkeiten und Gase hoch impermeabel, wenn ihr Porennetzwerk vollständig mit Kunstharz gefüllt ist.

Für das Imprägnieren der Vorproduktkörper können alle bekannten Verfahren wie beispielsweise die in DE 35 12 867 beschriebenen verwendet werden. Vorzugsweise werden jedoch Tauchverfahren, insbesondere Tauchverfahren mit vorherigem Evakuieren des den Vorproduktkörper enthaltenden Kessels und Fluten des evakuierten Kessels mit dem Kunstharz verwendet. Gegebenenfalls wird der Kessel nach dem Fluten mit dem Kunstharz noch mit einem Gasdruck beaufschlagt.
Will man nur eine oberflächennahe oder teilweise Imprägnierung des Vorproduktkörpers erreichen, wird die Imprägnierdauer verkürzt oder es werden die Flächen, von denen das Imprägnieren ausgehen soll, entsprechend mit Kunstharz eingestrichen oder besprüht oder es wird der Körper nur teilweise getaucht. Nach dieser Behandlung wird das überschüssige Harz von der Oberfläche entfernt.

Ein wesentlicher Aspekt dieser Erfindung ist das rationelle und schadenfreie Imprägnieren und Härten. Das auf Grund der Polymerisationsreaktionen mögliche rasche blasen- und rißfreie Härten wurde oben besprochen. Das rationelle Imprägnieren hängt wesentlich von der Viskosität des Harzsystems ab. Das vorliegende Acrylharzsystem hat mit weniger als 20 mPa·s eine sehr niedrige Viskosität weshalb der Imprägniererfolg sehr gut ist.

Je nach dem Verdichtungsgrad des Vorprodukts und dem davon abhängigen offenen Porenvolumen kann das Vorprodukt bis zu 100% seines eigenen Gewichtes an Harz aufnehmen. Wird jedoch eine hohe elektrische Leitfähigkeit des Endprodukts gewünscht, so geht man zweckmäßigerweise von einem stärker vorverdichteten Vorproduktkörper mit einem geringeren offenen Porenvolumen aus, der dann z.B. nur 20 Gew.-% Harz bezogen auf sein eigenes Gewicht aufnehmen kann. Ein solcher Körper kann nach dem Aushärten des Harzes für Flüssigkeiten und Gase in hohem Maße impermeabel sein, siehe Tabelle 2, und weist gute Festigkeitseigenschaften auf.

Die Kinetik der Härtungsreaktion ist bei den verwendeten Acrylharzsystemen extrem temperaturabhängig. Während bei Raumtemperatur nahezu keine Härtungsreaktion abläuft, setzt sie bei höheren Temperaturen und Wirksamwerden der Azoinitiatoren schlagartig ein. Ein zähviskoser Übergangszustand der Harzsysteme kann praktisch nicht beobachtet werden. Die Harzsysteme härten schlagartig durch. Die Aushärtung der Acrylharzsysteme erfolgt in um so kürzeren Zeiten je höher die Temperatur ist. Beispiele sind:

| | | | | |
|---|---|---|---|---|
| Temperatur | 60°C | 80°C | 100°C | 150°C |
| Härtezeit | Tage | 35 Minuten | 10 Minuten | 1 Minute |

Sollen größere Serien von Bauteilen oder Körpern nach den oben beschriebenen Techniken hergestellt werden, so wird man bestrebt sein, einige Verfahrensschritte rationell zusammenzufassen. Dies ist insbesondere bei der Formgebung von imprägnierten Vorproduktkörpern bei gleichzeitiger Aushärtung möglich. Zweckmäßigerweise gibt man dazu das imprägnierte Vorprodukt - meist in Form eines Halbzeuges oder Zuschnittes - in eine schon heiße Form und schließt diese. Dadurch nimmt das Halbzeug die gewünschte Geometrie an, wird gleichzeitig durchgewärmt und härtet endgültig aus.

Graphite gibt es in einer größeren Vielfalt auf der Basis künstlicher Herstellung und natürlicher Vorkommen, beide werden in der Patentschrift US 3,404,061 erwähnt. Im folgenden wird nur auf den Naturgraphit eingegangen, der als Rohstoff in den hier beschriebenen Körpern enthalten ist.

Naturgraphit wird bergmännisch gewonnen und wird mit beträchtlichem Aufwand vom "tauben" Gestein getrennt. Dennoch bleiben auch an den Naturgraphitflocken kleinste Mengen vom Gestein hängen oder sind mit den Flocken verwachsen. Für jede Provenienz des Naturgraphites sind diese "Fremdbestandteile" charakteristisch und können ebenfalls als Aschewert festgestellt werden. Eine Methode zur Bestimmung solcher Aschewerte ist in der DIN 51 903 unter dem Titel "Prüfung von Kohlenstoffmaterialien Bestimmung des Aschewertes" beschrieben.

Wegen der Endanwendungen der erfindungsgemäßen Kunstharz enthaltenden Graphitkörper ist es nicht unerheblich, welche Aschewerte und welche Aschezusammensetzung der enthaltene Graphit besitzt.
Werden solche Körper z.B. als an sich korrosionsbeständige Dichtungen in Anlagen eingesetzt, die mit korrosiven Medien beaufschlagt sind, so können bestimmte Aschebestandteile zusammen mit dem korrosiven Medium zu einem Lochfraß in dem an den korrosionsbeständigen Dichtungen angrenzenden Flanschen oder Buchsen von Stopfbuchspackungen und letztlich zum Versagen der Dichtverbindung führen.

Ein anderes Beispiel für eine mögliche negative Wirkung eines zu hohen Aschewertes oder einer ungünstigen Aschezusammensetzung des Graphites in einem erfindungsgemäßen, kunstharzhaltigen Körper findet man in der Brennstoffzellentechnik. So können beispielsweise Bipolarplatten von Proton-Exchange-Membrane-Fuel-Cells aus dem erfindungsgemäßen Material hergestellt sein. Enthält nun eine solche Platte einen zu hohen Aschegehalt, so kann während des Betriebes der Brennstoffzelle ein Teil schädlicher Aschebestandteile aus der Platte gelöst werden und die in der Nähe der Oberflächen der Bipolarplatte befindlichen empfindlichen Katalysatoren vergiften, was zu einem frühen Leistungsabfall der Zelle führt.

Wegen der möglichen negativen Auswirkungen eines zu großen Aschegehaltes liegt der Aschegehalt des für das Herstellen der erfindungsgemäßen Körper verwendeten Graphits bei 4 Gewichtsprozent und weniger, vorzugsweise bei weniger als 2 Gewichtsprozent und in besonderen Fällen bei nicht mehr als 0,15 Gewichtsprozent.

Es kann zweckmäßig sein, den erfindungsgemäßen Körper mit Füllstoffen anzureichern, wobei die Auswahl der Füllstoffe auf die Anwendung (z.B. Brennstoffzelle) abzustimmen ist. Füllstoffe können zum expandierten Naturgraphit nahe verwandte, elektrisch leitfähige Stoffe wie z.B. Stoffe aus der Gruppe der natürlich vorkommenden Flockengraphite, der künstlich hergestellten Elektrographite, Ruße oder Kohlenstoffe, der Graphit- oder Kohlenstofffasern sein. Des weiteren können Siliciumkarbid in Korn- oder Faserform oder auch elektrisch nicht leitfähige keramische oder mineralische Füllstoffe in Korn-, Plättchen- oder Faserform wie Silikate, Carbonate, Sulfate, Oxide, Gläser oder ausgewählte Mischungen davon verwendet werden.

Die erfindungsgemäßen Körper können überall dort verwendet werden, wo elektrisch und thermisch leitfähige Bauteile von geringem Gewicht mit guter Korrosionsbeständigkeit benötigt werden. Weitere für verschiedene Anwendungen wesentliche Eigenschaften sind geringe Aschewerte und relativ hohe Dichtigkeit. Insbesondere werden die erfindungsgemäßen Körper für Komponenten von Brennstoffzellen, für Dichtungen und für Wärmeleitelemente, z.B. zum Ableiten der Überschusswärme von integrierten Schaltungen verwendet.

Im Folgenden wird die Erfindung anhand von Beispielen weiter erläutert. Zusätzlich zu den Beispielen werden die Methoden zur Gewinnung der Daten der elektrischen Eigenschaften und der Gasdichtigkeit in Kürze behandelt.

Zur Bestimmung der Gasdichtigkeit wurde der harzimprägnierte Graphitkörper als Trennplatte (Prüfkörper) zwischen zwei Kammern einer Prüfvorrichtung gepreßt. In der ersten Kammer herrschte ein konstant gehaltener Heliumgasdruck von absolut 2 bar. In der zweiten Kammer befand sich ein Metallnetz, welches den Prüfkörper mechanisch stützte. Außerdem war diese Kammer bei Umgebungsdruck mit einer mit Flüssigkeit gefüllten Bürette verbunden, wie sie z. B. bei der Leckagemessung von Flachdichtungen nach DIN 3535 verwendet wird.
Das aus der ersten Kammer kommende und durch den Prüfkörper diffundierende Heliumgas wurde in der zweiten Kammer aufgefangen und mittels Verdrängung der Flüssigkeit in der Bürette gemessen. So konnte das Volumen des Heliumgases bestimmt werden, welches in einer Zeiteinheit durch die Probe diffundierte. Unter Berücksichtigung der Heliumdichte und der Prüffläche wurde eine Leckagerate ermittelt, die in der Einheit mg/(m²·s) angegeben wird.

Der Werkstoffverbund aus teilweise wieder verdichtetem expandiertem Graphit und Kunstharz hat anisotrope Eigenschaften, d.h. die einzelnen Graphitplättchen des expandierten Graphites haben - bedingt durch die Herstellungstechnik - eine Vorzugsorientierung. Parallel zu dieser Vorzugsorientierung ist z.B. der elektrische Widerstand niedrig, senkrecht dazu ist er höher. Im vorliegenden Fall wurden die erfindungsgemäßen, ausgehärteten Formkörper durch Messen des elektrischen Widerstandes senkrecht zur Vorzugsorientierung der Graphitlagen vergleichend charakterisiert. Dazu wurde der Körper zwischen zwei vergoldete Elektroden mit 50 mm Durchmesser mit definierter und jeweils gleicher Flächenpressung eingespannt. Die mit Hilfe eines Gerätes (Resistomat 2318) der Fa. Burster (Gernsbach, Deutschland) festgestellten elektrischen Widerstände R werden im Folgenden mit der Dimension [mΩ] angegeben.

### Beispiel 1

Folgende Vorproduktplatten wurden bei Raumtemperatur durch Tauchen imprägniert:

**Tabelle 1: Für die Imprägnierung mit einem Acrylharzsystem verwendete Vorproduktplatten aus teilweise wieder verdichtetem expandierten Graphit**

| | Typ der Vorproduktplatte | Dicke [mm] | Rohdichte [g/cm³] | Aschewert [Gew.-%] |
|---|---|---|---|---|
| Beispiel 1a | F02510C | 0,25 | 1,0 | < 2,0 |
| Beispiel 1b | L10010C | 1,0 | 1,0 | < 2,0 |
| Beispiel 1c | L40005Z | 4,0 | 0,5 | < 0,15 |

Das verwendete Harzsystem hatte folgende Zusammensetzung:
99,2 % Triethylenglycoldimethacrylat (Methacrylsäureester)
0,3 % 2,2'-Dimethyl-2,2'-azodipropiononitril
0,5 % 1,1'-Azobis-(1-cyclohexancarbonitril)

Der Methacrylsäureester stammte von der Fa. Röhm GmbH (Darmstadt, Deutschland) und hatte die Handelsbezeichnung PLEX 6918-O. Die beiden anderen Komponenten des Harzsystems hatten die Funktion eines Starters. 2,2'-Dimethyl-2,2'-azodipropiononitril stammte von der Fa. Pergan GmbH (Bocholt, Deutschland) und hatte die Handelsbezeichnung Peroxan AZDN. 1,1'-Azobis-(1-cyclohexancarbonitril) kam von der Fa. Wako Chemicals GmbH (Neuss, Deutschland) und trug die Bezeichnung V40. Die Viskosität des Harzsystems lag bei Raumtemperatur im Bereich von 10 - 15 mPa·s.
Die Vorproduktplatten wurden vollständig in das Harzbad eingetaucht und nach einer, fünf bzw. neun Stunden aus dem Tauchbad entnommen und das oberflächlich anhaftende Harz abgewischt. Die Platten wurden anschließend in einen Umluftofen bei 100 °C eingebracht und 30 min ausgehärtet. Die imprägnierten Vorproduktplatten zeigten trotz dieser Schockhärtung keinerlei Blasen oder Risse. Die an den Platten ermittelten Werte des Harzgehaltes, des Durchgangswiderstandes R und der Heliumpermeabilität λ wurden in Tabelle 2 zusammengefaßt und mit den Werten nicht imprägnierter Platten verglichen.

**Tabelle 2: Vergleich von mit einem Acrylharzsystem imprägnierten Vorproduktplatten (unterschiedlicher Dicke und Rohdichte) mit nicht imprägnierten Vorproduktplatten (von ebenfalls unterschiedlicher Dicke und Rohdichte); verglichen werden die Durchgangswiderstände R und die Heliumpermeabilitäten λ nach verschiedener Imprägnierdauer.**

| Typ der Vorproduktplatte | Imprägnierdauer 1 h | | | Imprägnierdauer 5 h | | | Imprägnierdauer 9 h | | |
|---|---|---|---|---|---|---|---|---|---|
| | Harzgehalt [%] | R [mΩ] | λ [mg/(m²·s)] | Harzgehalt [%] | R [mΩ] | λ [mg/(m²·s)] | Harzgehalt [%] | R [mΩ] | λ [mg/(m²·s)] |
| F02510C | 23,8 | 0,10 | 0,010 | 33, 3 | 0,19 | - | 36,1 | 0, 37 | < 0,001 |
| L10010C | 10,2 | 0,35 | 0,016 | 16,3 | 0,48 | 0,005 | 19,9 | 0,43 | < 0,001 |
| L40005C | 24,8 | 0,77 | - | 37,4 | 0,76 | - | 39,3 | 0,77 | - |
| | | | | | | | | | |

| Typ der Vorproduktplatte | ohne Imprägnierung | | | | | | | | |
|---|---|---|---|---|---|---|---|---|---|
| | Harzgehalt [%] | | | R [mΩ] | | | λ [mg/(m²·s)] | | |
| F02510C | 0 | | | < 0, 1 | | | 1,5 | | |
| L10010C | 0 | | | 0,28 | | | 0,323 | | |
| L40005C | 0 | | | 0,43 | | | - | | |

wie aus Tabelle 2 hervorgeht, ist der Harzgehalt der Verbundwerkstoffe empfindlich abhängig von der Rohdichte des Vorproduktes, von dessen Geometrie (Plattenstärke) und von der Imprägnierzeit. Der Durchgangswiderstand der imprägnierten Platten steigt mit zunehmendem Harzgehalt vergleichsweise geringfügig an, da die Elektronenleitung durch das bestehende Graphitnetzwerk getragen wird. Die Heliumpermeabilität der Platten wird durch die Imprägnierbehandlung drastisch reduziert. Je nach Harzgehalt der Platte reduziert sich die Permeabilität um mehr als 2 Zehnerpotenzen im Vergleich zu entsprechenden Vorproduktplatten ohne Imprägnierung.

### Beispiel 2

Als Harzsystem wurde das gleiche Harzsystem wie in Beispiel 1 verwendet. Das Vorprodukt hatte eine Dicke von 2,7 mm und eine Dichte von 0,65 g/cm³, der Aschewert des Graphites war kleiner 0,15 Gew.-%. Nach einer Imprägnierdauer von einer Stunde bei Raumtemperatur wurde die nun imprägnierte Platte aus dem Harzbad genommen und nach Abwischen des oberflächlich anhaftenden Harzes gewogen. Der ermittelte Harzanteil betrug 20 Gew.-%. Die imprägnierte Platte wurde in ein auf 150°C vorgeheiztes Preßwerkzeug gelegt. Das mit einer Antihaftschicht ausgerüstete Werkzeug wurde geschlossen und der imprägnierte Graphit in die Form gepreßt, wobei eine weitere Verdichtung des Verbundwerkstoffes stattfand. Nach fünf Minuten Einwirkzeit von Preßkraft und Temperatur wurde das Werkzeug geöffnet und der ausgehärtet Formkörper entnommen. Der Formkörper war frei von Rissen und Blasen und zeigte keinen mit dem Auge sichtbaren Harzfilm an der Oberfläche.

Neben diesen oben genannten Beispielen ist eine Vielzahl von weiteren Körpern und Verfahrensweisen nach der Lehre dieser Erfindung darstellbar. Demgemäß ist die Erfindung nicht auf die in den Beispielen dargestellten Ausführungsformen beschränkt.

## Patentansprüche

1. Imprägnierter Körper aus expandiertem oder aus mindestens teilweise wieder verdichtetem expandiertem Graphit, der entweder mindestens ein lösungsmittelfreies, niedrigviskoses, lagerstabiles, polymerisierbares Acrylharzsystem enthält oder durch Härten mindestens eines solchen Harzsystems erhaltene Polymere enthält,
**dadurch gekennzeichnet, dass**
das Acrylharzsystem ein Startersystem umfassend die Komponenten 2,2'-Dimethyl-2,2'-azodipropiononitril und 1,1'-Azobis-(1-cyclohexancarbo-nitril) enthält.

2. Mit Kunstharzen imprägnierter Körper nach Patentanspruch 1,
**dadurch gekennzeichnet, dass**
das Acrylharzsystem Triethylenglycoldimethacrylat enthält.

3. Imprägnierter Körper nach Patentanspruch 1
**dadurch gekennzeichnet, dass**
das Acrylharzsystem in dem Acrylharz enthaltenden Körper bei Raumtemperatur eine Lagerstabilität von mehr als zwei Tagen, vorzugsweise von mehr als zwei Wochen aufweist.

4. Imprägnierter Körper nach einem oder mehreren der Patentansprüche 1 bis 3, **dadurch gekennzeichnet, dass**
der imprägnierte Graphitkörper bis zu 50 Gew.-%, vorzugsweise 5 bis 25 Gew.-%, besonders bevorzugt 10 bis 20 Gew.-% Acrylharz enthält.

5. Imprägnierter Körper nach einem oder mehreren der Patentansprüche 1 bis 4, **dadurch gekennzeichnet, dass**
der Körper aus expandiertem oder aus mindestens teilweise wieder verdichtetem expandiertem Graphit keramische oder mineralische, elektrisch nicht leitfähige oder elektrisch leitfähige Füllstoffe enthält.

6. Imprägnierter Körper nach einem oder mehreren der Patentansprüche 1 bis 5 **dadurch gekennzeichnet, dass**
dieser Körper zwei jeweils für sich zusammenhaltende Netzwerke umfasst, von denen das eine aus einem zusammenhängenden Gerüst aus expandiertem oder aus expandiertem und danach mindestens teilweise wieder verdichtetem, elektrisch und thermisch leitfähigem Graphit besteht und das andere aus einem zusammenhängenden Netzwerk aus in den Graphit eingedrungenem Kunststoff besteht.

7. Imprägnierter Körper nach einem oder mehreren der Patentansprüche 1 bis 8, **dadurch gekennzeichnet, dass**
dieser Körper lediglich in oberflächennahen Zonen oder in einem Teil des Körpers mindestens ein Acrylharzsystem enthält.

8. Imprägnierter Körper nach einem oder mehreren der Patentansprüche 1 bis 7, **dadurch gekennzeichnet, dass**
dieser Körper an seiner Oberfläche keinen geschlossenen Harzfilm enthält und elektrisch leitend kontaktierbar ist.

9. Verfahren zur Herstellung eines imprägnierten Körpers nach Patentanspruch 1, umfassend die Schritte,
Her- oder Bereitstellen eines Körpers aus expandiertem oder aus mindestens teilweise wieder verdichtetem expandiertem Graphit mit offenem Porensystem als Vorprodukt,
Imprägnierung dieses Vorprodukts mit mindestens einem lösungsmittelfreien, niedrigviskosen, lagerstabilen, polymerisierbaren Acrylharzsystem
Weiterverarbeitung des imprägnierten Körpers zu einem Formkörper oder Belassen in der ursprünglichen Form
Härten des Harzes im imprägnierten Körper oder daraus hergestellten, harzhaltigen Formkörper ,
**dadurch gekennzeichnet, dass**
das Acrylharzsystem ein Startersystem umfassend die Komponenten 2,2'-Dimethyl-2,2'-azodipropiononitril und 1,1'-Azobis-(1-cyclohexancarbo-nitril) enthält.

10. Verfahren nach Patentanspruch 9, **dadurch gekennzeichnet, dass** das Harz ohne Anlegen eines Druckes augsgehärtet wird

11. Verfahren nach Patentanspruch 9, **dadurch gekennzeichnet, dass**
der Acrylharze enthaltende Körper gleichzeitig geformt und das enthaltene Harzsystem durch Temperaturbeaufschlagung ausgehärtet wird.

12. Verfahren zur Herstellung eines imprägnierten Körpers nach Patentansprüchen 9 bis 11,
**dadurch gekennzeichnet, dass**
ein Vorprodukt aus expandiertem oder aus mindestens teilweise wieder verdichtetem expandiertem Graphit mit offenem Porensystem und mit einem Aschewert von nicht mehr als vier Gew.-Prozent, vorzugsweise von nicht mehr als zwei Gew.-Prozent eingesetzt wird.

13. Verfahren zur Herstellung eines imprägnierten Körpers nach Patentansprüchen 9 bis 12,
**dadurch gekennzeichnet, dass**
ein Vorprodukt aus expandiertem oder aus mindestens teilweise wieder verdichtetem expandiertem Graphit mit offenem Porensystem und mit einer Rohdichte im Bereich von 0,1 bis 1,8 g/cm³, vorzugsweise mit einer Rohdichte im Bereich von 0,3 bis 1,5 g/cm³ und besonders bevorzugt mit einer Rohdichte im Bereich von 0,5 bis 1,3 g/cm³ verwendet wird.

14. Verfahren zur Herstellung eines imprägnierten Körpers nach Patentansprüchen 9 bis 13,
**dadurch gekennzeichnet, dass**
das Vorprodukt aus expandiertem oder aus mindestens teilweise wieder verdichtetem expandiertem Graphit mit offenem Porensystem mit Acrylharzen imprägniert wird, die bei Raumtemperatur eine Viskosität von unter 100 mPa.s, vorzugsweise von unter 50 mPa.s, besonders bevorzugt von unter 20 mPa.s aufweisen.

15. Verfahren zur Herstellung eines imprägnierten Körpers nach Patentansprüchen 9 bis 14,
**dadurch gekennzeichnet, dass**
das Vorprodukt aus expandiertem oder aus mindestens teilweise wieder verdichtetem expandiertem Graphit mit offenem Porensystem beim Imprägniervorgang bis zu 100 Gew.-%, vorzugsweise 5 bis 35 Gew.-%, besonders bevorzugt 10 bis 25 Gew.-% seines Eigengewichtes an Acrylharzen aufnimmt.

16. Verfahren zur Herstellung eines imprägnierten Körpers nach einem oder mehreren der Patentansprüche 9 bis 15, **dadurch gekennzeichnet, dass**
die Arcylharze in dem imprägnierten Körper unter der Einwirkung von Temperaturen von bis zu 200 °C in weniger als 10, bevorzugt in weniger als 3 Minuten ausgehärtet werden.

17. Verfahren zur Herstellung eines imprägnierten Körpers nach einem oder mehreren der Patentansprüche 9 bis 16, **dadurch gekennzeichnet, dass**
bei der Herstellung des Vorprodukts der expandierte Graphit mit keramischen oder mineralischen, elektrisch nicht leitfähigen oder elektrisch leitfähigen Füllstoffen gemischt und zu einem füllstoffhaltigen Vorprodukt verarbeitet wird. wird.

18. Verwendung von Acrylharzsysteme enthaltenden Körpern nach den vorgenannten Patentansprüchen, als Dichtungselemente, als Komponenten in Brennstoffzellen oder als Wärmeleitelemente.

## Claims

1. An impregnated body made of expanded or at least partially recompressed expanded graphite, which contains either at least one solvent-free, low-viscosity, storage-stable, polymerisable acrylic resin system or polymers obtained by curing at least one such resin system, **characterised in that** the acrylic resin system contains an initiator system comprising the components 2,2'-dimethyl-2,2'-azodipropiononitrile and 1,1'-azobis(1-cyclohexanecarbonitrile).

2. An impregnated body according to Claim 1, **characterised in that** the acrylic resin system contains triethyleneglycol dimethacrylate.

3. An impregnated body according to Claim 1, **characterised in that** the acrylic resin system in the acrylic resin-containing body has a storage stability at room temperature of more than two days, preferably of more than two weeks.

4. An impregnated body according to one or more of Claims 1 to 3, **characterised in that** the impregnated graphite body contains up to 50% by weight, preferably 5 to 25% by weight, particularly preferably 10 to 20% by weight, of acrylic resin.

5. An impregnated body according to one or more of Claims 1 to 4, **characterised in that** the body made of expanded or at least partially recompressed expanded graphite contains ceramic or mineral, electrically non-conductive or electrically conductive fillers.

6. An impregnated body according to one or more of Claims 1 to 5, **characterised in that** this body comprises two networks each held together independently, one of which consists of a connected framework made of expanded or of expanded and thereafter at least partially recompressed, electrically and thermally conductive graphite, and the other of which consists of a connected network made of synthetic material which has penetrated into the graphite.

7. An impregnated body according to one or more of Claims 1 to 6, **characterised in that** this body contains an acrylic resin system merely in regions close to the surface or in part of the body.

8. An impregnated body according to one or more of Claims 1 to 7, **characterised in that** this body does not contain a continuous resin film at its surface and is electrically conductively contactable.

9. A process for producing an impregnated body according to Claim 1, comprising the steps of
producing or providing a body made of expanded or at least partially recompressed expanded graphite with an open pore system as primary product,
impregnating this primary product with at least one solvent-free, low-viscosity, storage-stable, polymerisable acrylic resin system,
further processing the impregnated body to form a shaped body or leaving it in the original form,
curing the resin in the impregnated body or resin-containing shaped body produced therefrom,
**characterised in that** the acrylic resin system contains an initiator system comprising the components 2,2'-dimethyl-2,2'-azodipropiononitrila and 1,1'-azobis(1-cyclohexanecarbonitrile).

10. A process according to Claim 9, **characterised in that** the resin is cured without applying pressure.

11. A process according to Claim 9, **characterised in that** the acrylic resin-containing body is simultaneously shaped and the resin system present is cured as a result of temperature impact.

12. A process for producing an impregnated body according to Claims 9 to 11, **characterised in that** a primary product made of expanded or at least partially recompressed expanded graphite with an open pore system and with an ash value of not more than four per cent by weight, preferably of not more than two per cent by weight, is employed.

13. A process for producing an impregnated body according to Claims 9 to 12, **characterised in that** there is used a primary product made of expanded or at least partially recompressed expanded graphite with an open pore system and with a bulk density in the range from 0.1 to 1.8 g/cm³, preferably with a bulk density in the range from 0.3 to 1.5 g/cm³ and particularly preferably with a bulk density in the range from 0.5 to 1.3 g/cm³.

14. A process for producing an impregnated body according to Claims 9 to 13, **characterised in that** the primary product made of expanded or at least partially recompressed expanded graphite with an open pore system is impregnated with acrylic resins which have a viscosity at room temperature of less than 100 mPa·s, preferably of less than 50 mPa·s, particularly preferably of less than 20 mPa·s.

15. A process for producing an impregnated body according to Claims 9 to 14, **characterised in that** the primary product made of expanded or at least partially recompressed expanded graphite with an open pore system takes up, during the impregnating operation, up to 100% by weight, preferably 5 to 35% by weight, particularly preferably 10 to 25% by weight, of its own weight of acrylic resins.

16. A process for producing an impregnated body according to one or more of Claims 9 to 15, **characterised in that** the acrylic resins in the impregnated body are cured in less than 10 minutes, preferably in less than 3 minutes, under the effect of temperatures of up to 200°C.

17. A process for producing an impregnated body according to one or more of Claims 9 to 16, **characterised in that**, during the production of the primary product, the expanded graphite is mixed with ceramic or mineral, electrically non-conductive or electrically conductive fillers, and is processed to form a filler-containing primary product.

18. Use of bodies containing acrylic resin systems according to the aforementioned claims, as sealing elements, as components in fuel cells or as heat-conducting elements.

## Revendications

1. Corps imprégné de graphite expansé ou de graphite expansé re-compacté au moins en partie, qui contient soit au moins un système de résine acrylique sans solvant, faiblement visqueux, conservable et polymérisable, soit des polymères obtenus par durcissement d'au moins un tel système de résine,
**caractérisé en ce que**
le système de résine acrylique contient un système d'amorçage comprenant les composants 2,2'-diméthyl-2,2'-azodipropiononitrile et 1,1'-azobis(1-cyclohexane carbonitrile).

2. Corps imprégné de résines synthétiques selon la revendication 1,
**caractérisé en ce que**
le système de résine acrylique contient du diméthacrylate de triéthylène glycol.

3. Corps imprégné selon la revendication 1,
**caractérisé en ce que**
le système de résine acrylique dans le corps contenant de la résine acrylique présente, à la température ambiante, une durée de conservation supérieure à deux jours, de préférence supérieure à deux semaines.

4. Corps imprégné selon l'une quelconque ou plusieurs des revendications 1 à 3,
**caractérisé en ce que**
le corps en graphite imprégné contient jusqu'à 50 % en poids, de préférence de 5 à 25 % en poids, de manière particulièrement préférée de 10 à 20 % en poids de résine acrylique.

5. Corps imprégné selon l'une quelconque ou plusieurs des revendications 1 à 4,
**caractérisé en ce que**
le corps en graphite expansé ou expansé re-compacté au moins partiellement contient des charges céramiques ou minérales, électriquement conductrices ou non conductrices.

6. Corps imprégné selon l'une quelconque ou plusieurs des revendications 1 à 5,
**caractérisé en ce que**
ce corps renferme deux réseaux cohérents en soi, dont l'un est constitué d'une structure cohérente en graphite expansé ou en graphite électriquement et thermiquement conducteur, expansé puis re-compacté au moins partiellement, et dont l'autre est un réseau cohérent de matière synthétique ayant pénétré dans le graphite.

7. Corps imprégné selon l'une quelconque ou plusieurs des revendications 1 à 8,
**caractérisé en ce que**
ce corps contient au moins un système de résine acrylique uniquement dans la zone proche de la surface ou bien dans une partie du corps.

8. Corps imprégné selon l'une quelconque ou plusieurs des revendications 1 à 7,
**caractérisé en ce que**
ce corps ne contient pas de film de résine fermé à sa surface et peut être connecté de manière électriquement conductrice.

9. Procédé de fabrication d'un corps imprégné selon la revendication 1, comprenant les étapes suivantes,
- fabrication ou fourniture d'un corps en graphite expansé ou en graphite expansé re-compacté au moins partiellement, comportant un système de pores ouverts en tant que produit de départ,
- imprégnation de ce produit de départ avec au moins un système de résine acrylique sans solvant, faiblement visqueux, stable et polymérisable,
- transformation du corps imprégné en un corps moulé ou maintien de ce corps dans la forme d'origine,
- durcissement de la résine dans le corps imprégné ou dans le corps moulé contenant de la résine fabriqué à partir de celui-ci,
**caractérisé en ce que**
le système de résine acrylique contient un système d'amorçage renfermant les composants 2,2'-diméthyl-2,2'-azodipropiononitrile et 1,1'-azobis(1-cyclohexane carbonitrile).

10. Procédé selon la revendication 9,
**caractérisé en ce que**
la résine est durcie sans appliquer de pression.

11. Procédé selon la revendication 9,
**caractérisé en ce qu'**
le corps contenant des résines acryliques est façonné simultanément et le système de résine qu'il contient est durci sous l'action de la température.

12. Procédé de fabrication d'un corps imprégné selon les revendications 9 à 11,
**caractérisé en ce qu'**
on utilise un produit de départ en graphite expansé ou en graphite expansé re-compacté au moins partiellement, ayant un système de pores ouverts et une valeur de cendres ne dépassant pas 4 % en poids, de préférence ne dépassant pas 2 % en poids.

13. Procédé de fabrication d'un corps imprégné selon les revendications 9 à 12,
**caractérisé en ce qu'**
on utilise un produit de départ en graphite expansé ou en graphite expansé re-compacté au moins partiellement, ayant un système de pores ouverts et une densité apparente de l'ordre de 0,1 à 1,8 g/cm³, de préférence une densité apparente de l'ordre de 0,3 à 1,5 g/cm³ et de manière particulièrement préférée une densité apparente de l'ordre de 0,5 à 1,3 g/cm³.

14. Procédé de fabrication d'un corps imprégné selon les revendications 9 à 13,
**caractérisé en ce que**
le produit de départ en graphite expansé ou en graphite expansé re-compacté au moins partiellement, ayant un système de pores ouverts, est imprégné de résines acryliques présentant, à la température ambiante, une viscosité inférieure à 100 mPa.s, de préférence inférieure à 50 mPa.s, de manière particulièrement préférée inférieure à 20 mPa.s.

15. Procédé de fabrication d'un corps imprégné selon les revendications 9 à 14,
**caractérisé en ce que**
le produit de départ en graphite expansé ou en graphite expansé re-compacté au moins partiellement, ayant un système de pores ouverts, absorbe, lors de l'opération d'imprégnation, jusqu'à 100 % en poids, de préférence de 5 à 35 % en poids, de manière particulièrement préférée de 10 à 25 % en poids de son propre poids en résines acryliques.

16. Procédé de fabrication d'un corps imprégné selon l'une quelconque ou plusieurs des revendications 9 à 15,
**caractérisé en ce que**
les résines acryliques sont durcies, dans le corps imprégné, sous l'action de températures allant jusqu'à 200 °C en moins de 10, de préférence en moins de 3 minutes.

17. Procédé de fabrication d'un corps imprégné selon l'une quelconque ou plusieurs des revendications 9 à 16,
**caractérisé en ce que**
lors de la fabrication du produit de départ, le graphite expansé est mélangé à des charges céramiques ou minérales, électriquement non conductrices ou conductrices et transformé en un produit de départ chargé.

18. Utilisation de corps contenant des systèmes de résine acrylique selon les revendications ci-dessus, en tant qu'éléments d'étanchéité, de composants dans les piles à combustible ou en tant qu'éléments thermoconducteurs.
